(19) Europäisches Patentamt
European Patent Office
Office européen des brevets

(11) Veröffentlichungsnummer : **0 373 375 B1**

(12) # EUROPÄISCHE PATENTSCHRIFT

(45) Veröffentlichungstag der Patentschrift :
**09.09.92 Patentblatt 92/37**

(51) Int. Cl.$^5$ : **D21C 5/02**

(21) Anmeldenummer : **89121088.2**

(22) Anmeldetag : **14.11.89**

(54) **Deinken von Altpapieren.**

Verbunden mit 89912961.3/0445160 (europäische Anmeldenummer/Veröffentlichungsnummer) durch Entscheidung vom 14.10.91.

(30) Priorität : **23.11.88 DE 3839479**

(43) Veröffentlichungstag der Anmeldung :
**20.06.90 Patentblatt 90/25**

(45) Bekanntmachung des Hinweises auf die Patenterteilung :
**09.09.92 Patentblatt 92/37**

(84) Benannte Vertragsstaaten :
**AT BE CH DE ES FR GB IT LI LU NL SE**

(56) Entgegenhaltungen :
**EP-A- 0 172 684**
**DE-A- 667 722**

(73) Patentinhaber : **Henkel Kommanditgesellschaft auf Aktien**
**Henkelstrasse 67**
**W-4000 Düsseldorf 13 (DE)**

(72) Erfinder : **Fischer, Herbert, Dr.**
**Am Nettchesfeld 14**
**W-4000 Düsseldorf 13 (DE)**
Erfinder : **Hornfeck, Klaus**
**August-Burberg-Strasse 34**
**W-4020 Mettmann (DE)**
Erfinder : **Schieferstein, Ludwig, Dr.**
**Am Hang 15**
**W-4030 Ratingen 1 (DE)**

EP 0 373 375 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Deinken von Altpapieren sowie die Verwendung von mindestens teilweise wasserlöslichen Polymeren und/oder Copolymeren mit Zahlenmitteln der Molekulargewichte zwischen 2 000 und 500 000, hergestellt durch Polymerisation oder Copolymerisation von aminogruppenhaltigen ungesättigten Säurederivat-Monomeren, zum Deinken von Altpapieren.

Zur Herstellung von beispielsweise Zeitungsdruck- und Hygienepapieren werden heute in großen Mengen Altpapiere eingesetzt. Für diese Papiersorten bedeuten Helligkeit und Farbe bestimmte Qualitätsmerkmale. Um diese zu erreichen, müssen die Druckfarben aus den bedruckten Altpapieren entfernt werden. Üblicherweise geschieht dies mittels Deinking-Verfahren, die im wesentlichen in 2 Teilschritten ablaufen:

1. Aufschlagen der Altpapiere, d. h. Zerfasern in Wasser bei gleichzeitigem Einwirken der für die Ablösung der Druckfarbenteilchen benötigten Chemikalien und
2. Ausscheidung der abgelösten Druckfarbenteilchen aus der Faserstoffsuspension.

Der 2. Verfahrensschritt kann durch Auswaschen oder Flotation erfolgen (Ullmanns Encyclopädie der technischen Chemie, 4. Auflage, Band 17, Seiten 570 - 571 (1979)). Bei der Flotation, bei der die unterschiedliche Benetzbarkeit von Druckfarben und Papierfasern ausgenutzt wird, wird Luft durch die Faserstoffsuspensionen gedrückt oder gesaugt. Dabei verbinden sich kleine Luftbläschen mit den Druckfarbenteilchen und bilden an der Wasseroberfläche einen Schaum, der mit Stoffängern entfernt wird.

Üblicherweise wird das Deinken von Altpapieren bei alkalischen pH-Werten in Gegenwart von Alkalihydroxiden, Alkalisilikaten, oxidativ wirkenden Bleichmitteln und oberflächenaktiven Substanzen bei Temperaturen zwischen 30 und 50 °C durchgeführt. Als oberflächenaktive Substanzen, die das Ablösen und Trennen der Druckfarben bewirken, werden häufig Seifen und/oder Fettalkoholpolyglykolether eingesetzt (Ullmanns Encyclopädie der technischen Chemie, 4. Auflage, Band 17, Seiten 571-572 (1979)).

Aus der europäischen Patentschrift EP-A- 172 684 sind Copolymere von Acrylamid und Dimethyldiallylammoniumchlorid, deren Molekulargewichte vorzugsweise zwischen 2 000 000 und 10 000 000 liegen, bekannt, die zum Deinken von Cellulosematerial eingesetzt werden können. Die auf diese Weise behandelten Papiere besitzen jedoch sehr schlechte Weißgrade.

Die klassischen Druckfarbensysteme, beispielsweise auf Basis Nitrocellulose, Maleinatharze und/oder Schellack, die Ester und/oder Ketone, beispielsweise Ethylacetat und/oder Methylethylketon, oder Alkohole als Lösungsmittel enthalten, werden in den letzten Jahren aus Umweltschutzgründen in zunehmendem Maße durch wasserverdünnbare Druckfarben ersetzt. Ein weiterer Grund für die zunehmende Verwendung wasserverdünnbarer Druckfarben liegt in der Unbrennbarkeit von Wasser, wodurch in den Druckereien die bei Verwendung lösungsmittelhaltiger Druckfarben notwendige Installation aufwendiger Schutzeinrichtungen überflüssig wird. Die meisten wasserverdünnbaren Druckfarben enthalten als Bindemittel anionische Polymere, beispielsweise carboxylgruppenhaltige Polymere, durch deren Neutralisation mit Basen die Druckfarben wasserverdünnbar werden. Wasserverdünnbare Druckfarben haben jedoch den entscheidenden Nachteil, daß sie mit den üblichen in der Deinking-Flotte enthaltenen Tensiden - wenn überhaupt - nur völlig unzureichend entfernt werden können (Wochenblatt für Papierfabrikation 13, 537-538 (1988)). Das hat zur Folge, daß bis heute die in immer größeren Mengen anfallenden Altpapiere, die mit wasserverdünnbaren Druckfarben bedruckt wurden, nicht wiederverwertet werden und somit auch nicht als Altpapierrohstoff für Zeitungsdruck- und Hygienepapiere zur Verfügung stehen.

Die Aufgabe der Erfindung bestand somit in der Entwicklung eines Deinking-Verfahrens, mit dem es möglich ist, Altpapiere zu deinken. Insbesondere sollte mit einem solchen Deinking-Verfahren die Möglichkeit gegeben sein, Altpapiere, die mit wasserverdünnbaren Druckfarben bedruckte Altpapierbestandteile enthalten, zu deinken.

Überraschenderweise wurde gefunden, daß Druckfarben und insbesondere wasserverdünnbare Druckfarben in Wasch-Deinking- oder Flotation-Deinking-Verfahren in Gegenwart von mindestens teilweise wasserlöslichen Polymeren und/oder Copolymeren mit Zahlenmitteln der Molekulargewichte zwischen 2 000 und 500 000, hergestellt durch Polymerisation oder Copolymerisation von aminogruppenhaltigen, ungesättigten Säurederivat-Monomeren, entfernt werden können.

Gegenstand der Erfindung ist dementsprechend ein Verfahren zum Deinken von Altpapieren in Gegenwart von mindestens teilweise Wasserlöslichen Polymeren durch Aufschlagen in Wasser und anschließende Druckfarbenteilchen-entfernung durch Flotation oder Auswaschen, welches dadurch gekennzeichnet ist, daß Altpapiere in Gegenwart von mindestens teilweise wasserlöslichen Polymeren und/oder Copolymeren mit Zahlenmitteln der Molekulargewichte zwischen 2 000 und 500 000, hergestellt durch Polymerisation von

A. aminogruppenhaltigen Monomeren der allgemeinen Formel I

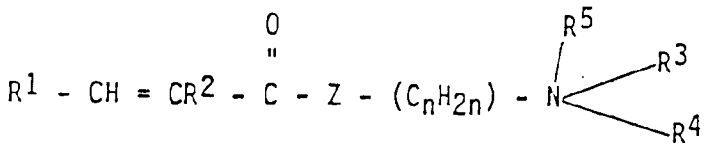

in der $R^1$ und $R^2$ jeweils Wasserstoff oder Methyl, $R^3$ und $R^4$ jeweils Wasserstoff oder einen $C_{1-4}$-Alkylrest oder einen Piperazin-, Peperidin- oder Morpholinrest bedeuten, $R^5$ einen geradoder verzweigtkettigen Alkylrest mit 1 bis 22 C-Atomen darstellt, mit der Maßgabe, daß das Gegenion zur Ammoniumfunktion ein Halogen-, Sulfat-, Phosphat-, Borat- oder organisches Säureanion ist, oder $R^5$ ein Elektronenpaar darstellt, Z O oder NH bedeutet und n eine Zahl zwischen 2 und 5 ist,

oder durch Copolymerisation von A. mit

B1. monomeren, ungesättigten Säuren der allgemeinen Formel II

$$R^5 - CH = CR^6 - \overset{\overset{O}{\|}}{C} - OH$$

in der $R^5$ und $R^6$ jeweils ein Wasserstoffatom oder eine Methylgruppe bedeuten, und/oder

B2. monomeren, ungesättigten Carbonsäureestern der allgemeinen Formel III

$$R^7 - CH = CR^8 - \overset{\overset{O}{\|}}{C} - O-(C_mH_{2m}O)_p - R^9$$

in der die Reste $R^7$ und $R^8$ jeweils ein Wasserstoffatom oder eine Methylgruppe und $R^9$ eine gerad- oder verzweigtkettige Alkylgruppe mit 1 bis 22 C-Atomen bedeuten und m Zahlen zwischen 2 und 4 darstellt und p eine Zahl zwischen 0 and 18 ist, mit der Maßgabe, daß im Falle p = 0 der Gehalt ungesättigter Carbonsäureester im Copolymer 30 Gew.-% nicht übersteigt und/oder

B3. Acrylamiden und/oder Methacrylamiden, die an den Amidstickstoffatomen durch gerad- und/oder verzweigtkettige Alkylreste mit 1 bis 22 C-Atomen substituiert sein können, und/oder

B4. N-Vinylpyrrolidon,

aufgeschlagen werden.

Weiterer Erfindungsgegenstand ist die Verwendung dieser Polymeren und/oder Copolymeren mit Zahlenmitteln der Molekulargewichte zwischen 2 000 und 500 000 zum Deinken von bedruckten Altpapieren.

Vorzugsweise kommen mindestens teilweise wasserlösliche Polymere und/oder Copolymere mit Zahlenmitteln der Molekulargewichte zwischen 5 000 und 200 000, besonders bevorzugt solche mit Zahlenmitteln der Molekulargewichte zwischen 10 000 und 100 000 zum Einsatz.

"Mindestens teilweise wasserlöslich" bedeutet, daß die Polymere und/oder Copolymere beim Anwendungs-pH-Wert zu mehr als 0,01 Gew.-% in Wasser klar oder trübe löslich sind.

Als aminogruppenhaltige Monomere der allgemeinen Formel I eignen sich insbesondere solche, in denen die Reste $R^1$ Wasserstoff, $R^2$ Wasserstoff oder Methyl, $R^3$ und $R^4$ jeweils Methyl oder Ethyl, $R^5$ ein Elektronenpaar oder $R^5$ eine $C_{1-4}$-Alkylgruppe mit der Maßgabe, daß das Gegenion zur Ammoniumfunktion ein Halogenanion ist, und Z O oder NH bedeuten und n eine Zahl zwischen 2 und 5 ist, beispielsweise Dimethylaminoethylmethacrylat, Dimethylaminoethylacrylat, Dimethylaminopropylmethacrylamid, Dimethylaminoneopentylacrylat, Diethylaminoethylacrylat, Diethylaminoethylmethacrylat und/oder Methacrylamidopropyltrimethylammoniumchlorid. Als monomere, ungesättigte Säuren der allgemeinen Formel II werden vorzugsweise Acrylsäure und/oder Methacrylsäure eingesetzt. Monomere, ungesättigte Carbonsäureester der allgemeinen Formel III, in denen der Rest $R^9$ vorzugsweise eine gerad- oder verzweigtkettige Alkylgruppe mit 1 bis 8 C-Atomen bedeutet, sind beispielsweise Ethylacrylat, Methylmethacrylat, Butylacrylat, Butylmethacrylat, Octylacrylat und/oder Butyl · 3 Mol Ethylenoxid-acrylat. Zur Copolymerisation mit aminogruppenhaltigen Monomeren der allgemeinen Formel I eignen sich ferner Acrylamid, Methacrylamid, N-Ethylacrylamid und/oder tert.-Butylacrylamid.

Die Polymerisation oder Copolymerisation der aminogruppenhaltigen Monomeren der allgemeinen Formel

I wird nach an sich bekannten Polymerisationsverfahren in wäßrigen Medien, die gewünschtenfalls mit Wasser mischbare Lösungsmittel, wie Alkohole - z. B. Isopropanol - enthalten, durchgeführt (Ullmanns Encyclopädie der technischen Chemie, 4. Auflage, Band 19, Seite 3-4, Verlag Chemie Weinheim, 1980). Als Starter wird eine radikalbildende Substanz, beispielsweise Kalium- oder Ammoniumperoxidsulfat, tert.-Butylhydroperoxid, Azobis(cyanpentansäure), Azobis(isobutyronitril) oder 2,2′-Azobis(2-amidinopropandihydrochlorid), in geringen Mengen zugegeben. Die Polymerisation oder Copolymerisation der aminogruppenhaltigen Monomeren der allgemeinen Formel I kann beispielsweise in der Weise erfolgen, daß aminogruppenhaltige Monomere der allgemeinen Formel I und gegebenenfalls Monomere der Gruppen B1, B2, B3 und/oder B4 gleichzeitig in Wasser, das den Starter enthält, getropft werden. Die Polymerisationstemperatur kann in einem weiten Bereich schwanken. In Abhängigkeit von dem eingesetzten Starter können Temperaturen zwischen 60 und 100 °C optimal sein. Es werden wäßrige Polymeren- und/oder Copolymerenlösungen mit Polymergehalten beispielsweise zwischen 10 und 60 Gewichtsprozent erhalten.

In Gegenwart der o. g. Polymeren und/oder Copolymeren lassen sich die unterschiedlichsten Druckfarben, insbesondere wasserverdünnbare Druckfarben, beispielsweise Zeitungsrotationsfarben Buchdruckfarben, Offsetdruckfarben, Illustrationstiefdruckfarben, Flexo- und Verpackungstiefdruckfarben aus bedruckten Altpapieren, beispielsweise Zeitungen, Illustrierten, Computerpapieren, Zeitschriften, Broschüren, Formularen, Telefonbüchern und/oder Katalogen entfernen. Die erhaltenen deinkten Altpapiere zeichnen sich durch sehr hohe Weißgrade aus.

Die zu deinkenden Altpapiere werden in einem Stofflöser in einer wässrigen Lösung, die typischerweise 0,5 bis 1,0 Gew.-% 100%iges Wasserstoffperoxid, 0,5 bis 2,5 Gew.-% 100%iges NaOH, 2,0 bis 4,0 Gew.-% Wasserglas, 35 Gew.-%ig (37 - 40 °Bé) und 0,01 bis 1 Gew-% Aktivsubstanz Polymere und/oder Copolymere - alle Gew.-%-Angaben beziehen sich auf lufttrockenes Altpapier - enthält, bei Temperaturen zwischen 20 und 60 °C aufgeschlagen. Um gute Deinking-Ergebnisse zu bekommen, werden pro 100 g lufttrockenem Altpapier 0,01 bis 1 g Aktivsubstanz erfindungsgemäße Polymere und/oder Copolymere eingesetzt. Nach einer Verweilzeit zwischen 60 und 120 Minuten bei Temperaturen zwischen 20 und 60 °C werden die Faserstoffsuspensionen in Wasser eingerührt, so daß 0,6 bis 1,6 Gew.-%ige Stoffsuspensionen erhalten werden. Anschließend wird vorzugsweise in an sich bekannter Weise, beispielsweise in einer Denver-Flotationszelle, flotiert.

## Beispiele

### Herstellung von Polydimethylaminoethylmethacrylat (Polymer I)

In einem Reaktor mit Rührer, 2 Zulaufgefäßen, Heizung, Kühlung, Rückflußkühlung sowie Temperaturmessung werden 170 mg 2,2′-Azobis(2-amidinopropandihydrochlorid) und 36,8 g Wasser vorgelegt. In das eine Zulaufgefäß (Zulaufgefäß 1) wurden 42 g Dimethylaminoethylmethacrylat gegeben, in das andere eine Lösung aus 330 mg 2,2′-Azobis(2-amidinopropandihydrochlorid) und 4 g Wasser. Nach Erwärmen der Vorlagelösung im Reaktor unter Rühren auf 75 °C wurden beide Zulauflösungen innerhalb von 90 Minuten parallel zugegeben. Nach beendetem Zulauf wurde die Mischung 60 Minuten bei 80 °C gerührt, danach wurde auf etwa 45 °C abgekühlt und mit 16,7 g einer 50 Gew.-%igen Ameisensäure neutralisiert.

Kenndaten der erhaltenen klaren, 50 Gew.-%igen wäßrigen Lösung: Brookfield-Viskosität (gemessen mit Spindel 5 bei 20 Umdrehungen pro Minute, Temperatur = 25 °C): 18 000 mPas

### Herstellung des Copolymers aus 78 Gew.-% Dimethylaminoethylmethacrylat, 7 Gew.-% Methacrylsäure und 15 Gew.-% Ethylacrylat (Copolymer I)

Die Herstellung des Copolymer I erfolgte analog der Herstellung von Polymer I, wobei 53,5 g statt 36,8 g Wasser vorgelegt wurden und in das Zulaufgefäß 1 eine Mischung aus 39 g Dimethylaminoethylmethacrylat, 7,5 g Ethylacrylat und 3,5 g Methacrylsäure gegeben wurde.

Auf den Neutralisationsschritt wurde verzichtet.

Kenndaten der erhaltenen opaken 50 Gew.-%igen wäßrigen Lösung: Brookfield-Viskosität (gemessen mit Spindel 5 bei 20 Umdrehungen pro Minute, Temperatur = 25 °C): 33000 mPas

### Herstellung des Copolymers aus 73 Gew.-% Dimethylaminoethylmethacrylat, 11 Gew.-% Acrylsäure und 16 Gew.-% Methylmethacrylat (Copolymer II)

32,0 g Acrylsäure
106,7 g 30 Gew.-%ige Schwefelsäure und
976,0 g Wasser

sowie

217,6 g Dimethylaminoethylmethacrylat
46,2 g Methylmethacrylat
1,1 g Azobis(isobuttersäurenitril) und
263,0 g Isopropanol

wurden getrennt vorgemischt, dann in ein Reaktionsgefäß mit Rührer, Heizung und Rückflußkühlung gegeben, auf 65 °C erhitzt und anschließend 30 Minuten bei dieser Temperatur, eine Stunde bei 70 °C und eine Stunde bei 80 °C gerührt.

Kenndaten der erhaltenen klaren 20 Gew.-%igen wäßrig-isopropanolischen Lösung:
spezifische Viskosität einer 1 Gew.-%igen Polymerlösung in 1 n $NaNO_3$-Lösung: 1,28

Herstellung des Copolymers aus 70 Gew.-% Dimethylaminomethylmethacrylat und 30 Gew.-% Acrylamid (Copolymer III)

In einem Reaktionsgefäß mit Rührer, 2 Zulaufgefäßen, Heizung, Kühlung, Rückflußkühlung sowie Temperaturmessung wurden 527 g Wasser und 1,6 g Azobis(cyanpentansäure) vorgelegt.

In das eine Zulaufgefäß wurden 140 g Dimethylaminoethylmethacrylat, 60 g Acrylamid und 147,4 g 30 Gew.-%ige Schwefelsäure, in das andere 1,6 g Azobis(cyanpentansäure) und 40 g Wasser gegeben.

Nach Erwärmen der Vorlagelösung auf 75 °C wurden beide Zulauflösungen innerhalb von 90 Minuten parallel zugegeben. Nach beendetem Zulauf wurde die Mischung 60 Minuten bei 85 °C gerührt. Es resultierte eine klare, 27 Gew.-%ige Polymerlösung mit einer Brookfield-Viskosität von 740 mPas (messen bei 25 °C und 20 Umdrehungen pro Minute mit Spindel 2).

Anwendungsbeispiele

98 g lutro ( = 90 g atro bei 8 % Feuchte) bedrucktes Altpapier (lutro = lufttrocken, atro = absolut trocken) aus 100 % Zeitungen, bedruckt mit wasserverdünnbaren Flexodruckfarben, wurde bei 3,5 Gew.-% Stoffdichte im Laborpulper mit wäßrigen Lösungen, bestehend aus

2 Gew.-% Natronwasserglas, 37 - 40 °Bé
1 Gew.-% Natriumhydroxid (100 %ig)
0,7 Gew.-% Wasserstoffperoxid (100 Gew.-%ig)
0,4 Gew.-% Tensid oder 0,2 Gew.-% erfindungsgemäßes Polymer oder Copolymer

bei 45 °C mittels Dispergierscheibe (3 000 Umdrehungen pro Minute) aufgeschlagen und nach 1 3/4 Stunde bei 45 °C auf 1 Gew.-% verdünnt, indem die Faserstoffsuspensionen in Wasser eingerührt wurden. Anschließend wurden die Faserstoffsuspensionen bei 45 °C in einer Denver-Flotationszelle bei 1 900 Umdrehungen pro Minute innerhalb von 15 Minuten flotiert.

Die Deinking Ergebnisse des in Gegenwart unterschiedlicher Polymerer und Copolymerer sowie in Gegenwart von Tensiden erhaltenen deinkten Altpapiers sind in Tabelle 1 zusammengefaßt. Die Deinkbarkeitsmaßzahl (DEM) wurde aus den Reflexionsfaktoren $R_{457nm}$ (Weißgrad) der bedruckten (BS), deinkten (DS) und unbedruckten (US) Papierstoffe nach folgender Formel errechnet:

$$\text{DEM (\%)} = \frac{\text{Weißgrad (DS)} - \text{Weißgrad (BS)}}{\text{Weißgrad (US)} - \text{Weißgrad (BS)}} \times 100$$

(0 % bedeutet keine Druckfarbenentfernung, 100 % bedeutet quantitative Druckfarbenentfernung).

Tabelle 1

| eingesetztes Polymer | $R_{457}$ (BS) | $R_{457}$ (DS) | $R_{457}$ (US) | DEM (%) | Aussehen des Kreisläufwassers |
|---|---|---|---|---|---|
| Polymer I | 36,3 | 46,1 | 55,9 | 50 | fast klar |
| Copolymer I | 36,3 | 51,0 | 56,4 | 73 | fast klar |
| Copolymer II | 36,3 | 46,5 | 56,3 | 51 | klar |
| Copolymer III | 32,1 | 45,1 | 56,1 | 54 | klar |
| zum Vergleich | | | | | |
| Fettsäure 1) | 36,3 | 35,6 | 56,3 | 0 | schwarz |
| Ferrocryl® 8767 2) | 36,3 | 35,4 | 56,4 | 0 | schwarz |

1) Olinor® 4010, Henkel KGaA

2) Copolymer aus 70 Gew.-% Dimethylaminoethylacrylat und 30 Gew.-% Acrylamid - Zahlenmittel des Molekulargewichtes: > 500 000; Hersteller: Henkel KGaA

**Patentansprüche**

1. Verfahren zum Deinken von Altpapieren in Gegenwart von mindestens teilweise wasserlöslichen Polymeren durch Aufschlagen in wasser und anschließende Druckfarbenteilchen-entfernung durch Flotation oder Auswaschen, dadurch gekennzeichnet, daß Altpapiere in Gegenwart von mindestens teilweise wasserlöslichen Polymeren und/oder Copolymeren mit Zahlenmitteln der Molekulargewichte zwischen 2 000 und 500 000, hergestellt durch Polymerisation von

   A. aminogruppenhaltigen Monomeren der allgemeinen Formel I

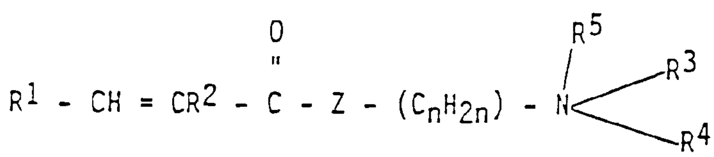

in der $R^1$ und $R^2$ jeweils ein Wasserstoffatom oder eine Methylgruppe, $R^3$ und $R^4$ jeweils ein Was-

serstoffatom oder eine $C_{1-4}$-Alkylgruppe oder einen Piperazin-, Piperidin-oder Morpholin-Rest bedeuten, $R^5$ einen gerad- oder verzweigtkettigen Alkylrest mit 1 bis 22 C-Atomen mit der Maßgabe, daß das Gegenion zur Ammoniumfunktion ein Halogen-, Sulfat-, Phosphat-, Borat- oder organisches Säureanion ist, darstellt oder $R^5$ ein Elektronenpaar ist, Z O oder NH bedeutet und n eine Zahl zwischen 2 und 5 ist,

oder durch Copolymerisation von A. mit

B1. monomeren, ungesättigten Säuren der allgemeinen Formel II

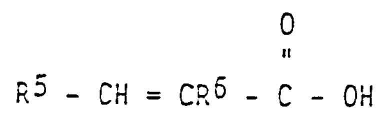

in der $R^5$ und $R^6$ jeweils ein Wasserstoffatom oder eine Methylgruppe bedeuten, und/oder

B2. monomeren, ungesättigten Carbonsäureestern der allgemeinen Formel III

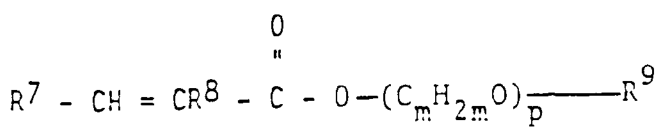

in der die Reste $R^7$ und $R^8$ jeweils ein Wasserstoffatom oder eine Methylgruppe und $R^9$ eine gerad- oder verzweigtkettige Alkylgruppe mit 1 bis 22 C-Atomen bedeuten, m Zahlen zwischen 2 und 4 darstellt und p eine Zahl zwischen 0 und 18 ist, mit der Maßgabe, daß im Falle p = 0 der Gehalt ungesättigter Carbonsäureester im Copolymer 30 Gew.-% nicht übersteigt und/oder

B3. Acrylamiden und/oder Methacrylamiden, die an den Amidstickstoffatomen durch gerad- und/oder verzweigtkettige Alkylreste mit 1 bis 22 C-Atomen substituiert sein können, und/oder

B4. N-Vinylpyrrolidon,

aufgeschlagen werden.

**2.** Verfahren nach Anspruch 1, dadurch gekennzeichnet, daß in der allgemeinen Formel I die Reste $R^1$ Wasserstoff, $R^2$ Wasserstoff oder Methyl, $R^3$ und $R^4$ jeweils Methyl oder Ethyl, $R^5$ ein Elektronenpaar oder $R^5$ eine $C_{1-4}$-Alkylgruppe mit der Maßgabe, daß das Gegenion ein Halogenanion ist, bedeuten und in der allgemeinen Formel III der Rest $R^9$ eine gerad- oder verzweigtkettige Alkylgruppe mit 1 bis 8 C-Atomen bedeutet.

**3.** Verfahren nach einem oder beiden der Ansprüche 1 bis 2, dadurch gekennzeichnet, daß Altpapiere in Gegenwart von mindestens teilweise wasserlöslichen Polymeren und/oder Copolymeren mit Zahlenmitteln der Molekulargewichte zwischen 5 000 und 200 000, vorzugsweise zwischen 10 000 und 100 000, aufgeschlagen werden.

**4.** Verfahren nach einem oder mehreren der Ansprüche 1 bis 3, dadurch gekennzeichnet, daß Altpapiere, die Altpapierbestandteile aus mit wasserverdünnbaren Druckfarben bedruckten Papieren enthalten, aufgeschlagen werden.

**5.** Verwendung von mindestens teilweise wasserlöslichen Polymeren und/oder Copolymeren mit Zahlenmitteln der Molekulargewichte zwischen 2 000 und 500 000, hergestellt durch Polymerisation von

A. aminogruppenhaltigen Monomeren der allgemeinen Formel I

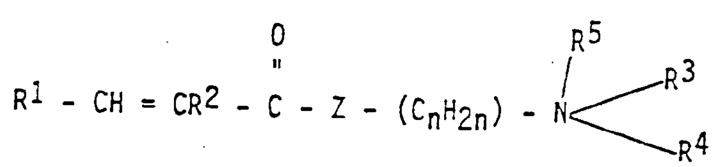

in der $R^1$ und $R^2$ jeweils Wasserstoffatom oder eine Methylgruppe, $R^3$ und $R^4$ jeweils ein Wasserstoffatom oder eine $C_{1-4}$-Alkylgruppe oder einen Piperazin-, Piperidin-oder-Morpholin-Rest bedeuten, $R^5$ einen gerad- oder verzweigtkettigen Alkylrest mit 1 bis 22 C-Atomen mit der Maßgabe, daß das Gegenion zur Ammoniumfunktion ein Halogen-, Sulfat-, Phosphat-, Borat- oder organisches Säureanion ist, darstellt oder $R^5$ ein Elektronenpaar ist, Z O oder NH bedeutet und n eine Zahl zwischen 2 und 5 ist,

oder durch Copolymerisation von A. mit

B1. monomeren, ungesättigten Säuren der allgemeinen Formel II

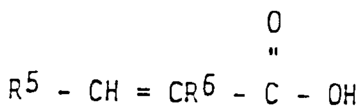

in der $R^5$ und $R^6$ jeweils ein Wasserstoffatom oder eine Methylgruppe bedeuten, und/oder

B2. monomeren, ungesättigten Carbonsäureestern der allgemeinen Formel III

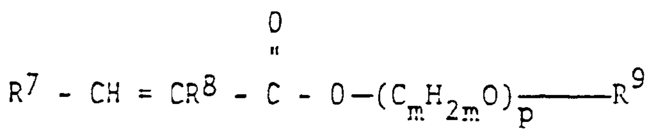

in der die Reste $R^7$ und $R^8$ jeweils ein Wasserstoffatom oder eine Methylgruppe und $R^9$ eine gerad- oder verzweigtkettige Alkylgruppe mit 1 bis 22 C-Atomen bedeuten, m Zahlen zwischen 2 und 4 darstellt und p eine Zahl zwischen 0 und 18 ist, mit der Maßgabe, daß im Falle p = 0 der Gehalt ungesättigter Carbonsäureester im Copolymer 30 Gew.-% nicht übersteigt und/oder

B3. Acrylamiden und/oder Methacrylamiden, die an den Amidstickstoffatomen durch gerad- und/oder verzweigtkettige Alkylreste mit 1 bis 22 C-Atomen substituiert sein können, und/oder

B4. N-Vinylpyrrolidon,

zum Deinken von Altpapieren.

6. Verwendung nach Anspruch 5, dadurch gekennzeichnet, daß mindestens teilweise wasserlösliche Polymere und/oder Copolymere mit Zahlenmitteln der Molekulargewichte zwischen 5 000 und 200 000, vorzugsweise zwischen 10 000 und 100 000, verwendet werden.

7. Verwendung nach einem oder beiden der Ansprüche 5 bis 6, dadurch gekennzeichnet, daß die mindestens teilweise wasserlöslichen Polymeren und/oder Copolymeren zum Deinken von Altpapieren, die Altpapierbestandteile aus mit wasserverdünnbaren Druckfarben bedruckten Papieren enthalten, verwendet werden.

## Claims

1. A process for the deinking of wastepaper in the presence of at least partly water-soluble polymers by disintegration in water and subsequent removal of the printing ink particles by flotation or washing out, characterized in that wastepaper is disintegrated in the presence of at least partly water-soluble polymers and/or copolymers having number average molecular weights in the range from 2,000 to 500,000 prepared by polymerization of

A. monomers containing amino groups corresponding to general formula I

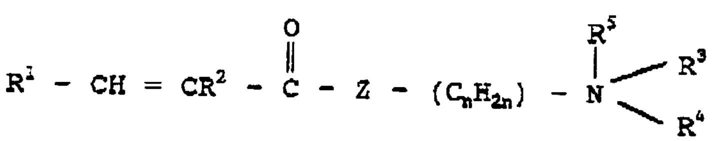

in which $R^1$ and $R^2$ represent hydrogen or methyl, $R^3$ and $R^4$ represent hydrogen or a $C_{1-4}$ alkyl

radical or a piperazine, piperidine or morpholine group, $R^5$ is a linear or branched $C_{1-22}$ alkyl radical, with the proviso that the counterion to the ammonium function is a halogen, sulfate, phosphate, borate or organic acid anion, or $R^5$ is an electron pair, Z represents O or NH and n is a number of 2 to 5,
or by copolymerization of A. with
B1. monometic, unsaturated acids corresponding to general formula II

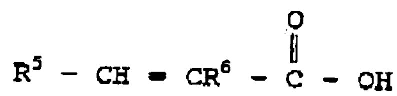

in which $R^5$ and $R^6$ each represent a hydrogen atom or a methyl group, and/or
B2. monomeric, unsaturated carboxylic acid esters corresponding to general formula III

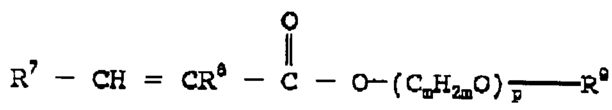

in which $R^7$ and $R^8$ each represent a hydrogen atom or a methyl group and $R^9$ is a linear or branched $C_{1-22}$ alkyl group, m is a number of 2 to 4 and p is a number of 0 to 18, with the proviso that, where p = 0, the content of unsaturated carboxylic acid esters in the copolymer does not exceed 30% by weight, and/or
B3. acrylamides and/or methacrylamides which may be substituted at the amide nitrogen atoms by linear and/or branched $C_{1-22}$ alkyl radicals, and/or
B4. N-vinyl pyrrolidone.

2. A process as claimed in claim 1, characterized in that, in general formula I, $R^1$ is hydrogen, $R^2$ is hydrogen or methyl, $R^3$ and $R^4$ each represent methyl or ethyl, $R^5$ is an electron pair or $R^5$ is a $C_{1-4}$ alkyl group, with the proviso that the counterion is a halogen anion, and in that, in general formula III, $R^9$ is a linear or branched $C_1$-$C_8$ alkyl group.

3. A process as claimed in one or both of claims 1 to 2, characterized in that wastepaper is refined in the presence of at least partly water-soluble polymers and/or copolymers having number average molecular weights in the range from 5,000 to 200,000 and preferably in the range from 10,000 to 100,000.

4. A process as claimed in one or more of claims 1 to 3, characterized in that wastepaper containing constituents of papers printed with water-dilutable printing inks are refined.

5. The use of at least partly water-soluble polymers and/or copolymers having number average molecular weights in the range from 2,000 to 500,000 prepared by polymerization of
A. monomers containing amino groups corresponding to general formula I

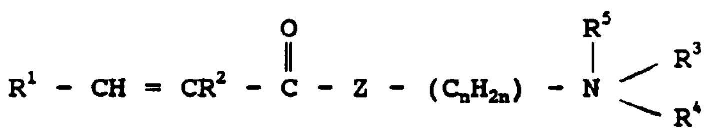

in which $R^1$ and $R^2$ represent hydrogen or methyl, $R^3$ and $R^4$ represent hydrogen or a $C_{1-4}$ alkyl radical or a piperazine, piperidine or morpholine group, $R^5$ is a linear or branched $C_{1-22}$ alkyl radical, with the proviso that the counterion to the ammonium function is a halogen, sulfate, phosphate, borate or organic acid anion, or $R^5$ is an electron pair, Z represents O or NH and n is a number of 2 to 5,
or by copolymerization of A. with
B1. monomeric, unsaturated acids corresponding to general formula II

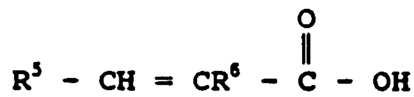

in which $R^5$ and $R^6$ each represent a hydrogen atom or a methyl group, and/or

B2. monomeric, unsaturated carboxylic acid esters corresponding to general formula III

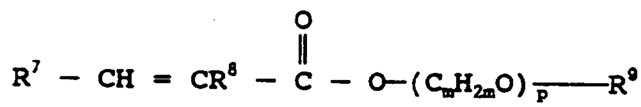

in which $R^7$ and $R^8$ each represent a hydrogen atom or a methyl group and $R^9$ is a linear or branched $C_{1-22}$ alkyl group, m is a number of 2 to 4 and p is a number of 0 to 18, with the proviso that, where p = 0, the content of unsaturated carboxylic acid esters in the copolymer does not exceed 30% by weight, and/or

B3. acrylamides and/or methacrylamides which may be substituted at the amide nitrogen atoms by linear and/or branched $C_{1-22}$ alkyl radicals, and/or

B4. N-vinyl pyrrolidone, for deinking wastepaper.

**6.** The use claimed in claim 5, characterized in that at least partly water-soluble polymers and/or copolymers having number average molecular weights in the range from 5,000 to 200,000 and preferably in the range from 10,000 to 100,000 are used.

**7.** The use claimed in one or both of claims 5 to 6, characterized in that the at least partly water-soluble polymers and/or copolymers are used for deinking wastepaper containing constituents of papers printed with water-dilutable printing inks.

**Revendications**

1°) Procédé de désencrage des vieux papiers en présence de polymères au moins partiellement solubles dans l'eau par trituration dans l'eau et élimination corrélative des particules de couleurs d'impression par flottation ou lavage, caractérisé en ce que les vieux papiers sont triturés en présence de polymères et/ou de copolymères au moins partiellement solubles dans l'eau, ayant des chiffres moyens de poids moléculaire compris entre 2 000 et 500 000 produits par polymérisation de :

A - des monomères renfermant des groupes amino, de formule générale (I) :

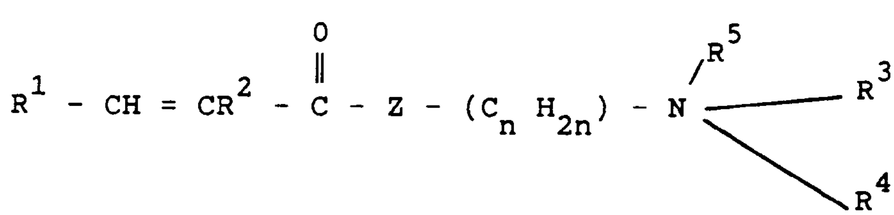

dans laquelle $R^1$, et $R^2$ représentent respectivement un atome d'hydrogène ou un radical méthyle,

$R_3$ et $R_4$ respectivement, représentent un atome d'hydrogène, ou un groupe alcoyle en $C_1$-$C_4$ ou un reste pipérazine, pipéridine, ou morpholine,

$R^5$ est un radical alcoyle à chaîne linéaire ou ramifiée, ayant de 1 à 22 atomes de carbone avec la restriction que l'ion opposé à la fonction ammonium est un halogène, un sulfate, un phosphate, un borate ou un anion d'acide organique,

ou $R^5$ est une paire d'électrons, Z signifie O ou NH,

et n est un nombre entre 2 et 5,

ou par copolymérisation de A avec :

B1 - des acides non saturés monomériques de formule générale (II) :

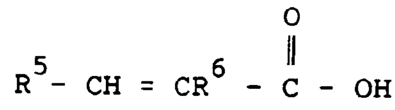

dans laquelle $R^5$ et $R^6$ signifient respectivement un atome d'hydrogène ou un radical méthyle, et/ou

B2 - des esters d'acides carboxyliques non saturés monomériques de formule générale (III) :

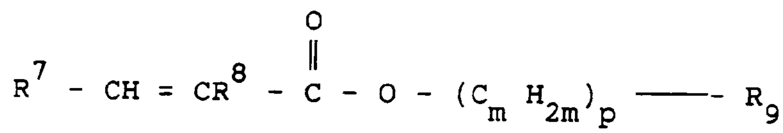

dans laquelle les radicaux $R^7$ et $R^8$ signifient respectivement un atome d'hydrogène ou un radical méthyle,

et $R^9$ un radical alcoyle à chaîne droite ou ramifiée ayant de 1 à 22 atomes de carbone,

m représente des nombres entre 2 et 4 et p est un nombre entre 0 et 18,

avec la restriction que dans le cas où p = 0, la teneur en ester d'acide carboxylique non saturé dans le copolymère ne dépasse pas 30 % en poids, et/ou

B3 - des acrylamides et/ou méthacrylamides qui peuvent être substitués par des radicaux alcoyle à chaîne linéaire et/ou ramifiée ayant de 1 à 22 atomes de carbone,

et/ou,

B4 - de la N-vinylpyrolidone.

2°) Procédé selon la revendication 1, caractérisé en ce que dans la formule générale (I), les restes $R^1$ représentent de l'hydrogène, $R^2$ représente de l'hydrogène ou méthyle, $R^3$ et $R^4$ respectivement représentent un méthyle ou un éthyle, $R^5$ représente une paire d'électrons ou $R^5$ représente un radical alcoyle en $C_1$-$C_4$, avec la restriction que l'ion opposé est un anion halogène,

et dans la formule générale (III), le reste $R^9$ signifie un radical alcoyle à chaîne linéaire ou ramifiée ayant de 1 à 8 atomes de carbone.

3°) Procédé selon l'une ou les deux revendications 1 à 2, caractérisé en ce que des vieux papiers sont triturés en présence de polymères et/ou copolymères au moins partiellement solubles dans l'eau avec des chiffres moyens de poids moléculaires entre 5000 et 200 000, de préférence entre 10 000 et 100 000.

4°) Procédé selon l'une ou plusieurs des revendications 1 à 3, caractérisé en ce que les vieux papiers qui renferment des constituants de vieux papiers à base de papiers imprimés avec des colorants d'impression que l'on peut diluer à l'eau.

5°) Utilisation de polymères et/ou de copolymères au moins partiellement solubles dans l'eau ayant des chiffres moyens de poids moléculaire compris entre 2000 et 500 000 obtenus par polymérisation de :

A - des monomères renfermant des groupes amino, de formule générale (I) :

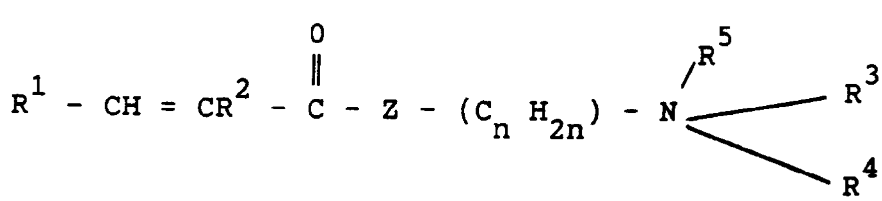

dans laquelle $R_1$ et $R_2$ représentent respectivement un atome d'hydrogène ou un radical méthyle,

$R^3$ et $R^4$ respectivement représentent un atome d'hydrogène ou un radical alcoyle en $C_1$ à $C_4$ ou un radical pipérazine, pipéridine, ou morpholine,

$R^5$ représente un radical alcoyle à chaîne linéaire ou ramifié ayant de 1 à 22 atomes de carbone avec la restriction que l'ion opposé à la fonction ammonium, est un halogène, un sulfate, un phosphate, un borate ou un anion d'acide organique,

et $R^5$ est une paire d'électrons,

Z représente O ou NH,
et n est un nombre compris entre 2 et 5
ou par copolymérisation de A avec,
B1 - des acides non saturés monomériques de formule générale (II) :

$$R^5 - CH = CR^6 - \overset{\overset{\displaystyle O}{\|}}{C} - OH$$

dans laquelle $R^5$ et $R^6$ respectivement signifient un atome d'hydrogène ou un radical méthyle,
et/ou,
B2 - des esters d'acide carboxylique non saturés monomériques de formule générale (III) :

$$R^7 - CH = CR^8 - \overset{\overset{\displaystyle O}{\|}}{C} - O - (C_m H_{2m} O)_p \text{———} R^9$$

dans laquelle les radicaux $R^7$ et $R^8$ respectivement signifient un atome d'hydrogène ou un radical méthyle, et $R^9$ signifie un radical alcoyle à chaîne linéaire ou ramifiée ayant de 1 à 22 atomes de carbone,
m représente des nombres entre 2 et 4 et p est un nombre entre 0 et 18, avec la restriction que dans le cas ou p = O, la teneur en ester d'acide carboxylique non saturé dans le copolymère, ne dépasse pas 30 % en poids,
et/ou,
B3 - des acrylamides et/ou méthacrylamides qui peuvent être substitués sur les atomes d'azote amidiques par des radicaux alcoyle à chaîne droite et/ou ramifiée ayant de 1 à 22 atomes de carbone,
et/ou,
B4 - la N-vinylpyrolidone pour le désencrage des vieux papiers.

6°) Utilisation selon la revendication 5, caractérisée en ce que des polymères et/ou copolymères au moins partiellement solubles dans l'eau ayant des chiffres moyens de poids moléculaire compris entre 5000 et 200 000, de préférence entre 10 000 et 100 000, sont utilisés.

7°) Utilisation selon l'une ou les deux revendications 5 à 6, caractérisée en ce que l'on utilise des polymères et/ou copolymères au moins partiellement solubles dans l'eau, pour le désencrage des vieux papiers, qui contiennent des constituants de vieux papiers, de papiers imprimés avec des couleurs d'impression que l'on peut diluer à l'eau.